# FASCICULE DE BREVET EUROPEEN

(11) **EP 1 862 052 B1**
(45) Date de publication et mention de la délivrance du brevet: **08.08.2012**
(21) Numéro de dépôt: 07108346.3
(22) Date de dépôt: 16.05.2007
(51) Int. Cl.: A01C 7/20, A01B 69/00

(54) **Semoir**
Sämaschine
Seeder

(30) Priorité: 29.05.2006 FR 0651932
(43) Date de publication de la demande: 05.12.2007
(73) Titulaire: Kuhn-Huard S.A., 44142 Chateaubriant Cedex (FR)
(72) Inventeur: Tailly, Stéphane, 35150, Janze (FR); Gentilhomme, Guy, 44110, Louisfert (FR)
(74) Mandataire: Andres, Jean-Claude

(56) Documents cités:
- EP-A1- 0 612 464
- EP-A1- 0 692 179
- EP-A1- 1 195 084
- DE-A1- 10 151 256
- DE-A1- 19 806 769

## Description

La présente invention se rapporte au domaine technique général du machinisme agricole. Elle concerne une machine agricole semi-portée et plus particulièrement un semoir permettant de semer dans un sol sans aucun travail préalable du sol.

Ce semoir semi-porté comportant un timon d'attelage et un châssis destiné à être lié à son extrémité frontale à un tracteur, ledit châssis s'appuie au sol au moyen d'au moins une roue disposée à l'arrière dudit châssis, ledit châssis étant destiné à supporter une trémie, au moins un outil ouvreur et un organe d'implantation.

Un tel semoir semi-porté est déjà connu par la demande de brevet FR 2 817 447. Ce semoir connu utilise un organe d'implantation directement lié avec l'outil ouvreur. L'articulation de l'outil ouvreur supporte donc aussi l'organe d'implantation. L'articulation étant située bien en avant de l'outil ouvreur, elle est fortement sollicitée lors du travail en courbes. Pour un bon fonctionnement du semoir, un espace relativement important sous le châssis est nécessaire pour que le débattement vertical de l'outil ouvreur et de l'organe d'implantation soit suffisant.

On constate qu'avec un tel semoir semi-porté, lors de déplacements suivant des trajectoires en courbes pour des virages par exemple, les roues ainsi que les outils ouvreurs et les organes d'implantation ont tendance à riper sur le sol. En raison du ripage dans les trajectoires en courbes, les organes d'implantation ne peuvent plus suivre la trajectoire des outils ouvreurs correspondants. La graine n'est donc pas déposée dans le sillon préparé par l'outil ouvreur. Ce phénomène de ripage est engendré parce que les roues du semoir ne pivotent pas autour du même point, appelé centre instantané de rotation, que les roues du tracteur. Lors du ripage, les outils ouvreurs et les organes d'implantation ne sont alors plus correctement entraînés en rotation mais ils ont plutôt tendance à glisser sur le sol. Par conséquent, les débris végétaux ne sont pas coupés par les outils ouvreurs mais plutôt pressés dans le sol. La graine déposée par l'organe d'implantation est alors au contact des débris végétaux au lieu d'être au contact du sol. Dans cet environnement, une germination de la graine n'est pas favorable.

Ce glissement sur le sol engendre aussi des déformations et une fatigue prématurée au niveau des dispositifs de fixation respectifs des outils ouvreurs et des organes d'implantation sur le châssis.

Le document EP 1 195 084 se rapporte à un semoir dont les outils ouvreurs sont montés sur le châssis et les organes d'implantation sont liés au cadre porteur. Le cadre porteur étant lié au châssis au moyen d'une articulation d'axe sensiblement vertical.

La présente invention a pour but de proposer un semoir permettant de remédier à cet inconvénient de l'état de la technique et notamment en proposant un semoir pour lequel l'effet de ripage, de glissement sur le sol est limité voire annulé.

A cet effet, une importante caractéristique de l'invention consiste en ce que chaque outil ouvreur et chaque organe d'implantation sont liés audit châssis par l'intermédiaire d'un cadre porteur et que ledit cadre porteur est lié audit châssis au moyen d'une articulation pivot d'axe au moins sensiblement vertical. Grâce à cette articulation pivot, le ripage des outils ouvreurs et les organes d'implantation dans des trajectoires en courbes est limité. Le cadre porteur s'oriente automatiquement selon la trajectoire du tracteur et l'organe d'implantation peut suivre exactement la trajectoire empruntée par l'outil ouvreur correspondant. De plus, les dispositifs de fixation respectifs des outils ouvreurs et des organes d'implantation sont moins sollicités.

D'autres caractéristiques et avantages de l'invention se dégageront des revendications et de la description qui va suivre d'un exemple de réalisation non limitatif de l'invention avec référence aux dessins annexés dans lesquels :
- la **figure 1** représente une vue de côté d'un semoir selon l'invention,
- la **figure 2** est une vue de dessus du semoir de la figure 1,
- la **figure 3** représente une vue de dessus dans un virage du semoir,
- la **figure 4** est une vue de détail d'une partie du semoir.

Le semoir agricole (1), conforme à la présente invention, représenté sur les figures, comporte un timon d'attelage (2) et un châssis (3). Lors du travail ou du transport, ledit semoir (1) est déplacé suivant une direction et un sens d'avance indiqué par la flèche (A). A cet effet, le semoir (1) est attelé à l'arrière d'un tracteur au moyen du timon d'attelage (2). Le timon (2) est pourvu à sa partie frontale d'une tête d'attelage (4) connue de l'homme de l'art. Dans l'exemple de réalisation, représenté sur les figures, ladite tête d'attelage (4) est réalisée au moyen d'un anneau destiné à s'engager dans un crochet (non représenté) dudit tracteur. A son extrémité arrière, le timon (2) est lié au châssis (3) à l'aide d'une première articulation (5) présentant un axe au moins sensiblement horizontal et orthogonal à la direction de travail (A), de sorte à pouvoir être pivoté autour de l'axe de la première articulation (5) sous l'action d'un organe de commande (6) implanté entre le timon (2) et le châssis (3).

Dans la suite de la description, les notions suivantes "avant" et "arrière", "devant" et "derrière" sont définies par rapport au sens d'avance (A), et les notions "droite" et "gauche" sont définies en regardant ledit semoir (1) de l'arrière dans le sens d'avance (A).

Le semoir (1) de l'invention est prévu pour la réalisation de semis direct. Le semis direct consiste à ne pas travailler le sol et à n'intervenir que sur la ligne de semis lors de la mise en place de la culture. Dans ce cas, la surface du sol est couverte de paille et de morceaux de végétaux de la récolte précédente. Ce type de semoir (1) est, d'une manière connue, équipé d'au moins un outil ouvreur (7) qui réalise un travail localisé sur la ligne de semis avant la mise en terre des graines par au moins un organe d'implantation (8). Dans l'exemple de réalisation, l'outil ouvreur (7) est un seul disque ouvreur (9) qui ouvre et émiette, sous l'effet de la vitesse, un sillon avant le passage des organes d'implantation (8). Le disque ouvreur (9) va aussi couper les résidus végétaux qui se trouvent sur la ligne de semis. La circonférence dudit disque ouvreur (9) pénètre plus ou moins profondément dans le sol et favorise ainsi la préparation d'une ligne de semis. L'organe d'implantation (8) est disposé dans le prolongement dudit outil ouvreur (7) correspondant. L'organe d'implantation (8) est réalisé sous la forme d'au moins un disque semeur (10). De préférence, il est constitué de deux disques disposés en V qui ouvrent le sillon dans lequel est déposée la graine. Chaque disque semeur (10) se déplace toujours au moins sensiblement dans le sillon étroit créé par le disque ouvreur (9) correspondant. Puis, d'une manière connue, la graine déposée est recouverte de terre et la surface de la ligne de semis est rappuyée par une roue de contrôle de profondeur (11). La culture est ainsi mise en place en un seul passage à une vitesse relativement élevée, par exemple 10 à 12 Km/h.

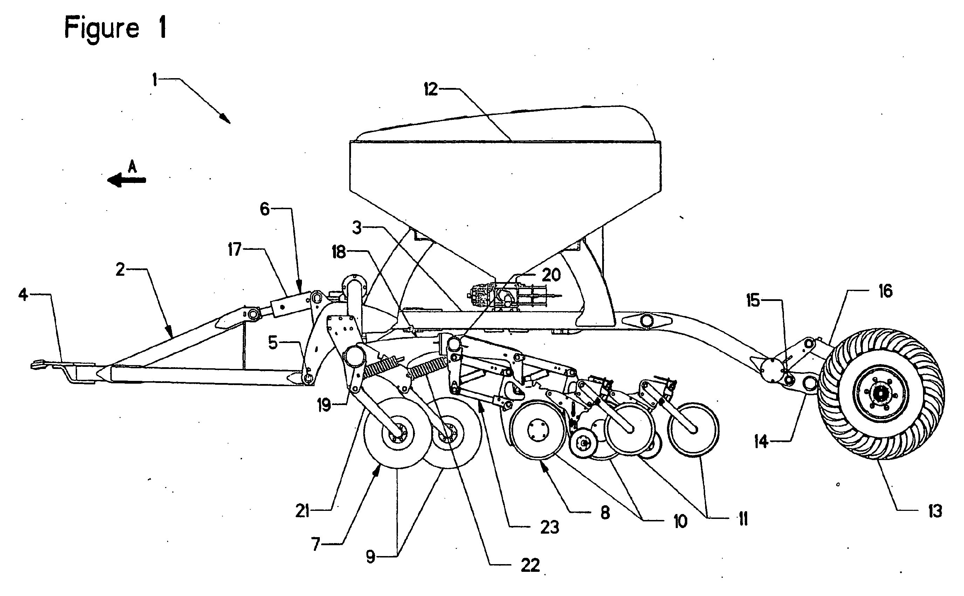

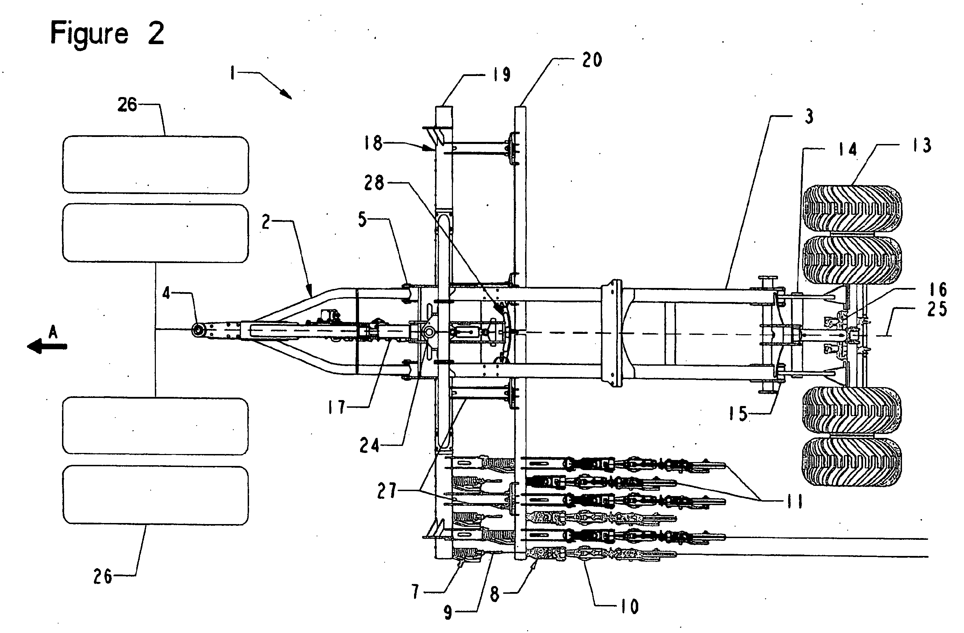

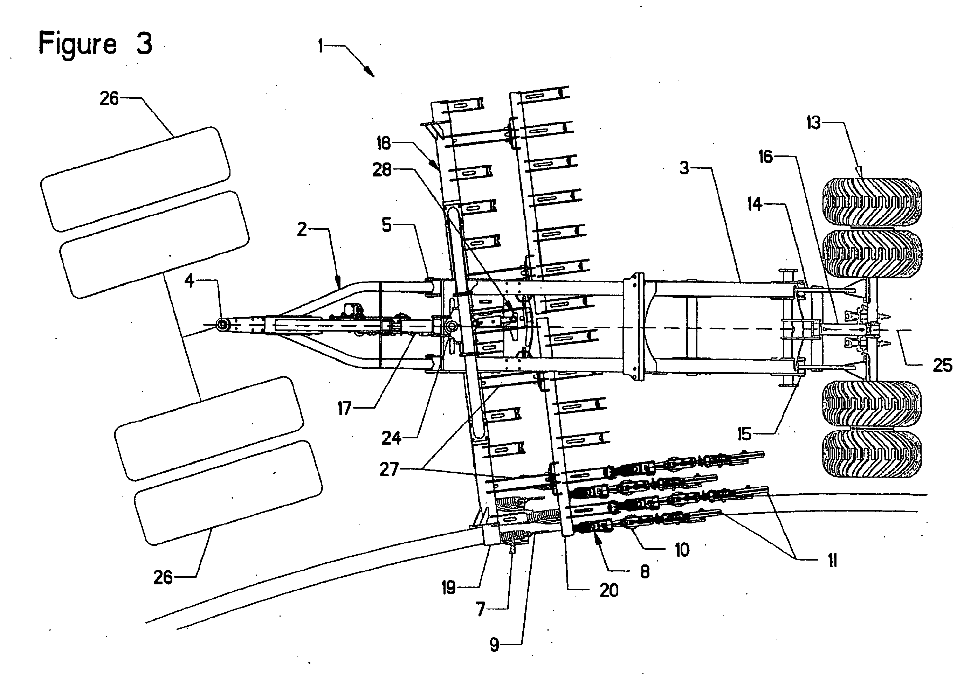

Dans l'exemple de réalisation de la figure 1, le semoir (1) est équipé à l'avant de disques ouvreurs (9) du type disque droit. Sur les figures 2 et 3, le disque ouvreur (9) est avantageusement un disque gaufré qui travaille la ligne de semis sur une bande étroite. De manière alternative, on pourrait remplacer le disque ouvreur (9) gaufré par un disque ondulé qui génèrera un sillon plus large et un foisonnement plus important sur la ligne de semis.

A la lumière des figures 1 et 2, le châssis (3) du semoir (1) porte les disques ouvreurs (9) et les disques semeurs (10) qui sont répartis de manière au moins sensiblement uniforme sur toute la largeur de travail dudit semoir (1). Le châssis (3) porte également une trémie (12) qui contient les graines destinées à être implantées dans le sol par les disques semeurs (10). Le semoir agricole (1) est du type semi-porté, ainsi il s'appuie au moins partiellement sur le sol au moyen de roues (13) au travail comme au transport. Les roues (13) sont liées à la partie arrière du châssis (3) et avantageusement de manière à pouvoir être déplacées en hauteur. Les roues (13) par l'intermédiaire d'un bras de roue (14) sont liées au châssis (3) au moyen d'une deuxième articulation (15) d'axe au moins sensiblement horizontal et orthogonal à la direction d'avance (A). Entre les roues (13) et le châssis (3) est encore implanté un premier vérin de relevage (16). Ce premier vérin (16) permet de déplacer le châssis (3) en hauteur et de le maintenir dans la position choisie. Le semoir (1) peut donc être abaissé pour le travail ou soulevé pour le transport.

L'organe de commande (6) est constitué d'un deuxième vérin hydraulique (17) qui tend à faire pivoter le timon d'attelage (2) vers le haut autour de la première articulation (5). Mais comme l'extrémité avant du timon d'attelage (2) est liée au tracteur, il en résulte que l'extrémité arrière du timon d'attelage (2) appuie sur la partie avant du châssis (3) ce qui fait pénétrer plus facilement les disques ouvreurs (9) dans le sol. En modifiant l'inclinaison relative du timon (2) par rapport au châssis (3), par actionnement du deuxième vérin (17) dans un sens ou dans l'autre, l'utilisateur peut soit alléger les disques ouvreurs (9), lorsqu'il travaille en terrain meuble soit au contraire reporter plus le poids du semoir (1) sur les disques ouvreurs (9), afin d'en améliorer la pénétration dans le sol en terrain plus dur. Il est avantageux de combiner la commande du premier vérin (16) et du deuxième vérin (17) par l'intermédiaire du circuit hydraulique pour passer de la position de travail à la position de transport et inversement.

Selon une importante caractéristique de l'invention et d'après la figure 2, chaque outil ouvreur (7) et chaque organe d'implantation (8) sont liés audit châssis (3) par l'intermédiaire d'un cadre porteur (18). Le cadre porteur (18) comprend deux poutres (19, 20) horizontales qui s'étendent orthogonalement à la direction d'avance (A). La poutre avant (19) porte les outils ouvreurs (7) et la poutre arrière (20) porte les organes d'implantation (8). Chaque outil ouvreur (7) et chaque disque semeur (10) correspondant s'étendent au moins sensiblement dans le prolongement l'un de l'autre. D'une manière avantageuse, le disque semeur (10) et le disque ouvreur (9) sont indépendants l'un de l'autre verticalement, c'est-à-dire que chacun peut éviter un obstacle en effectuant une translation vers le haut sans que la position de l'autre soit modifiée.

Dans l'exemple de réalisation des figures, chaque disque ouvreur (9) est lié à la poutre avant (19) au moyen d'un bras (21) respectif. Ledit bras (21) étant articulé autour d'un axe sensiblement horizontal et perpendiculaire à la direction d'avance (A) sur ladite poutre avant (19). Ainsi, chaque disque ouvreur (9) peut aussi s'escamoter individuellement lorsqu'il rencontre un obstacle enfoui dans le sol. On remarque également qu'un ressort de compression (22) est associé à chaque disque ouvreur (9). Ce ressort (22) permet de régler l'effort de pénétration dans le sol de chaque disque ouvreur (9). Chaque disque semeur (10) est, quant à lui, lié à la poutre arrière (20) au moyen d'un dispositif de liaison (23). Le dispositif de liaison (23) comporte, d'une manière connue, deux bielles dont la disposition forme au moins sensiblement un parallélogramme déformable vers le haut. Ainsi, l'angle d'implantation des graines dans le sol reste constant, quelle que soit la profondeur de semis. Sur chaque dispositif de liaison (23) est encore agencé un élément élastiquement déformable tendant à conserver le disque semeur (10) au fond du sillon. Dans l'exemple décrit, l'élément élastiquement déformable est un ressort de traction implanté sensiblement parallèlement à la direction de travail (A). De ce fait quelle que soit la position en hauteur du disque semeur (10), l'action du ressort agissant sur le parallélogramme déformable est au moins sensiblement constante.

Selon une autre importante caractéristique de l'invention, ledit cadre porteur (18) est lié audit châssis (3) au moyen d'une articulation pivot (24) d'axe au moins sensiblement vertical. Grâce à cette articulation pivot (24) dans les virages, l'organe d'implantation (8) peut suivre plus fidèlement la trajectoire empruntée par l'outil ouvreur (7) correspondant. La figure 3 représente le semoir (1) au travail suivant une trajectoire en courbes. Le cadre porteur (18) s'oriente automatiquement selon la trajectoire du tracteur et le phénomène de ripage des outils ouvreurs (7) et des organes d'implantation (8) dans des trajectoires en courbes est limité voire annulé. L'articulation pivot (24) est avantageusement comprise dans un plan vertical médian (25) dudit châssis (3). De manière préférentielle, ladite articulation pivot (24) est disposée sensiblement en avant des outils ouvreurs (7). Sur cette figure 3, on peut voir les roues arrière (26) du tracteur. De plus par la présence de cette articulation pivot (24), les efforts au niveau des bras (21), des outils ouvreurs (7) et des dispositifs de fixation (23) des organes d'implantation (8) sur leur poutre (19, 20) respective sont fortement réduits dans les trajectoires en courbes.

A la lumière des figures 2 et 3, on remarque que la poutre arrière (20) est liée à la poutre avant (19) par l'intermédiaire de traverses de liaison (27) disposées sensiblement dans la direction d'avance (A). La poutre arrière (20) est liée à la poutre avant (19) de manière à ce que les disques semeurs (10) soient sensiblement alignés dans le prolongement des outils ouvreurs (7) correspondants. Sur les figures 2 et 3, un certain nombre d'outils ouvreurs (7) et d'organes d'implantation (8) ont été représentés. A l'arrière des disques semeurs (10), il est courant de monter la roue de contrôle de profondeur (11) qui assure d'une part un bon contact entre le sol et la graine et d'autre part qui permet un semis à une profondeur régulière. Un meilleur recouvrement des graines est obtenu par l'utilisation d'une herse de recouvrement (non représentée) qui est liée au châssis (3). Cette herse de recouvrement est disposée à l'avant ou à l'arrière des roues (13). Avec une configuration dans laquelle la herse de recouvrement est montée à l'arrière des roues (13), le semoir (1) présente une longueur globale réduite. Le semoir (1) est alors compact par rapport à une configuration dans laquelle la herse de recouvrement est disposée à l'avant des roues (13) et derrière les organes d'implantation (8).

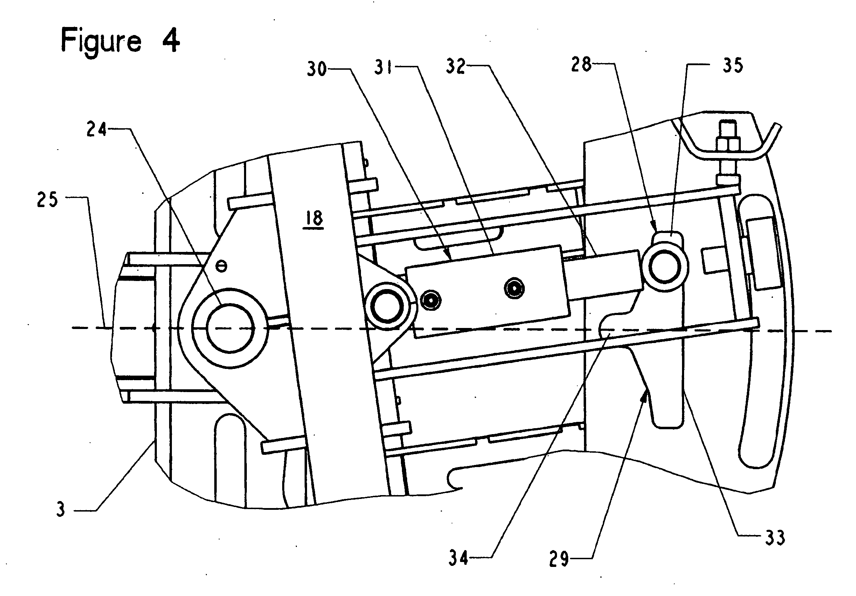

Pour le bon fonctionnement du semoir (1) en dévers et notamment dans la position de transport, il est nécessaire de verrouiller l'articulation pivot (24). Le semoir (1) comporte donc des moyens de verrouillage (28) de ladite articulation pivot (24). Ces moyens de verrouillage (28) doivent autoriser le libre pivotement du cadre porteur (18) par rapport au châssis (3) lors du travail, alors qu'au transport le pivotement doit être supprimé. A cet effet, les moyens de verrouillage (28) se composent notamment d'une coulisse (29) liée au châssis (3) et d'un actionneur (30). Les moyens de verrouillage (28) permettent le blocage automatique de l'articulation pivot (24) lors du passage à la position de transport. A la lumière de la figure 4, le corps (31) de l'actionneur (30) est lié au cadre porteur (18) et le piston (32) de l'actionneur (30) est destiné à être en contact avec le châssis (3). Le piston (32) réalise la fonction de coulisseau dans la rainure (33) de la coulisse (29). D'une manière avantageuse, la rainure (33) présente une forme symétrique par rapport au plan vertical médian (25) du châssis (3). Elle présente une position de verrouillage (34) et au moins une position de libre pivotement (35). La position de verrouillage (34) est disposée exactement dans le plan vertical médian (25). Le semoir (1) dans la figure 2 est déplacé selon une trajectoire droite sur un terrain en dévers. L'articulation pivot (24) est donc verrouillée et le piston (32) est dans la position de verrouillage (34). Les moyens de verrouillage (28) provoquent un verrouillage de ladite articulation pivot (24) favorable à une bonne stabilité dudit semoir (1) sur un terrain en dévers ou lors de son transport. Sur la figure 3, le pivotement de l'articulation pivot (24) est libre, le semoir (1) suit une trajectoire en courbes. Le piston (32) est dans l'une des positions de libre pivotement (35). Il est encore possible de rendre le pivotement du cadre porteur (18) autour de l'articulation pivot (24) plus difficile, c'est-à-dire de raidir l'articulation pivot (24) au moyen d'un accumulateur oléopneumatique (non représenté) relié à l'actionneur (30).

Pour la mise en position de transport, il est intéressant de combiner le verrouillage de l'articulation pivot (24) de manière automatique. Ainsi, l'actionneur (30) est avantageusement relié au premier vérin (16) par l'intermédiaire du circuit hydraulique. Le circuit hydraulique est piloté par l'utilisateur depuis le poste de pilotage du tracteur au moyen d'un distributeur.

Une alternative pour le verrouillage ou le contrôle de l'articulation pivot (24) est de remplacer l'actionneur (30) par deux vérins disposés de part et d'autre de l'articulation pivot (24).

Selon un autre exemple de réalisation de l'invention, non représenté sur les figures, le cadre porteur (18) ne comporte qu'une seule poutre portant les outils ouvreurs (7) et les organes d'implantation (8). Dans cette configuration, les organes d'implantation (8) sont liés à l'arrière des outils ouvreurs (7) au moyen du dispositif de liaison (23).

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) semi-porté comportant un timon d'attelage (2) et un châssis (3) destiné à être lié à son extrémité frontale à un tracteur, ledit châssis (3) s'appuie au sol au moyen d'au moins une roue (13) disposée à l'arrière dudit châssis (3), ledit châssis (3) étant destiné à supporter une trémie (12), au moins un outil ouvreur (7) et au moins un organe d'implantation (8), ***caractérisé en ce que*** chaque outil ouvreur (7) et chaque organe d'implantation (8) sont liés audit châssis (3) par l'intermédiaire d'un cadre porteur (18) et que ledit cadre porteur (18) est lié audit châssis (3) au moyen d'une articulation pivot (24) d'axe au moins sensiblement vertical.

2. Semoir agricole selon la revendication 1, ***caractérisé en ce que*** ladite articulation pivot (24) est disposée sensiblement dans le plan médian (25) du châssis (3).

3. Semoir agricole selon la revendication 1 ou 2, ***caractérisé en ce que*** ladite articulation pivot (24) est disposée sensiblement à l'avant desdits outils ouvreurs (7).

4. Semoir agricole selon l'une quelconque des revendications 1 à 3, ***caractérisé en ce que*** ledit cadre porteur (18) comporte une poutre avant (19) et une poutre arrière (20).

5. Semoir agricole selon la revendication 4, ***caractérise en ce que*** lesdits outils ouvreurs (7) sont montés sur ladite poutre avant (19) et les organes d'implantation (8) sont montés sur ladite poutre arrière (20), ladite poutre arrière (20) étant liée à la poutre avant (19) au moyen d'au moins une traverse (27) de manière à ce que chaque organe d'implantation (8) soit disposé dans le prolongement dudit outil ouvreur (7) correspondant.

6. Semoir agricole selon l'une quelconque des revendications 1 à 3, ***caractérisé en ce que*** ledit cadre porteur (18) comporte une seule poutre et que les organes d'implantation (8) sont montés à i'arrière des outils ouvreurs (7) au moyen d'un dispositif de liaison (23).

7. Semoir agricole selon l'une quelconque des revendications 1 à 6, ***caractérisé en ce que*** lesdits outils ouvreurs (7) et les organes d'implantation (8) sont indépendants l'un de l'autre.

8. Semoir agricole selon l'une quelconque des revendications 1 à 7, ***caractérisé en ce que*** des moyens de verrouillage (28) sont implantés entre le châssis (3) et le cadre porteur (18) autorisant durant le travail le libre pivotement du cadre porteur (18) par rapport au châssis (3) et supprimant ledit pivotement durant le transport.

9. Semoir agricole selon la revendication 8, ***caractérisé en ce que*** ladite articulation pivot (24) est bloquée automatiquement lors du transport via les moyens de verrouillage (28).

10. Semoir agricole selon la revendication 8 ou 9, ***caractérisé en ce que*** les moyens de verrouillage (28) se composent d'une coulisse (29) et d'au moins un actionneur (30).

## Claims

1. Semi-mounted seed-drill (1) comprising a hitching bar (2) and a chassis (3) intended to be linked at its front end to a tractor, the said chassis (3) rests on the ground by means of at least one wheel (13) arranged at the rear of the said chassis (3), the said chassis (3) being intended to support a hopper (12), at least one opening implement (7) and at least one planting member (8), ***characterized in* that** each opening implement (7) and each planting member (8) are linked to the said chassis (3) by means of a carrier frame (18) and that the said carrier frame (18) is linked to the said chassis (3) by means of a swivel hitch (24) which has an at least substantially vertical axis.

2. Agricultural seed-drill according to Claim 1, ***characterized in* that** the said swivel hitch (24) is arranged substantially in the median plane (25) of the chassis (3).

3. Agricultural seed-drill according to Claim 1 or 2, ***characterized in* that** the said swivel hitch (24) is arranged substantially at the front of the said opening implements (7).

4. Agricultural seed-drill according to any one of Claims 1 to 3, ***characterized in* that** the said carrier frame (18) comprises a front beam (19) and a rear beam (20).

5. Agricultural seed-drill according to Claim 4, ***characterized in* that** the said opening implements (7) are mounted on the said front beam (19) and the planting members (8) are mounted on the said rear beam (20), the said rear beam (20) being linked to the front beam (19) by means of at least one crosspiece (27) such that each planting member (8) is arranged in the continuation of the said corresponding opening implement (7).

6. Agricultural seed-drill according to any one of Claims 1 to 3, ***characterized in* that** the said carrier frame (18) comprises a single beam and that the planting members (8) are mounted at the rear of the opening implements (7) by means of a connecting device (23).

7. Agricultural seed-drill according to any one of Claims 1 to 6, ***characterized in* that** the said opening implements (7) and the planting members (8) are independent of each other.

8. Agricultural seed-drill according to any one of Claims 1 to 7, ***characterized in* that** locking means (28) are arranged between the chassis (3) and the carrier frame (18), allowing during work the free pivoting of the carrier frame (18) with respect to the chassis (3) and suppressing the said pivoting during transport.

9. Agricultural seed-drill according to Claim 8, ***characterized in* that** the said swivel hitch (24) is blocked automatically during transport via the locking means (28).

10. Agricultural seed-drill according to Claim 8 or 9, ***characterized in* that** the locking means (28) are composed of a slide (29) and at least one actuator (30).

## Patentansprüche

1. Aufgesattelte Sämaschine (1) mit einer Kupplungsdeichsel (2) und einem Gestell (3), das dazu bestimmt ist, an seinem vorderen Ende mit einem Traktor verbunden zu werden, wobei das Gestell (3) sich am Boden mittels mindestens eines Rades (13) abstützt, das hinten am Gestell (3) angeordnet ist, wobei das Gestell (3) dazu bestimmt ist, einen Trichter (12), mindestens ein Öffnungswerkzeug (7) und mindestens ein Saatablageelement (8) zu tragen, ***dadurch gekennzeichnet,* dass** jedes Öffnungswerkzeug (7) und jedes Saatablageelement (8) mit dem Gestell (3) mittels eines Tragrahmens (18) verbunden sind, und dass der Tragrahmen (18) mit dem Gestell (3) mittels eines Drehgelenks (24) mit einer zumindest im Wesentlichen vertikalen Achse verbunden ist.

2. Landwirtschaftliche Sämaschine nach Anspruch 1, ***dadurch gekennzeichnet,* dass** das Drehgelenk (24) im Wesentlichen in der Mittelebene (25) des Gestells (3) angeordnet ist.

3. Landwirtschaftliche Sämaschine nach Anspruch 1 oder 2, ***dadurch gekennzeichnet,* dass** das Drehgelenk (24) im Wesentlichen vorne an den Öffnungswerkzeugen (7) angeordnet ist.

4. Landwirtschaftliche Sämaschine nach irgend einem der Ansprüche 1 bis 3, ***dadurch gekennzeichnet,* dass** der Tragrahmen (18) einen vorderen Träger (19) und einen hinteren Träger (20) umfasst.

5. Landwirtschaftliche Sämaschine nach Anspruch 4, ***dadurch gekennzeichnet,* dass** die Öffnungswerkzeuge (7) auf dem vorderen Träger (19) montiert sind und die Saatablageelemente (8) auf dem hinteren Träger (20) montiert sind, wobei der hintere Träger (20) mit dem vorderen Träger (19) über mindestens einen Querbalken (27) verbunden ist, so dass jedes Saatablageelement (8) in der Verlängerung des entsprechenden Öffnungswerkzeugs (7) angeordnet ist.

6. Landwirtschaftliche Sämaschine nach irgend einem der Ansprüche 1 bis 3, ***dadurch gekennzeichnet,* dass** der Tragrahmen (18) einen einzigen Träger umfasst und dass die Saatablageelemente (8) hinten an den Öffnungswerkzeugen (7) mittels einer Verbindungsvorrichtung (23) montiert sind.

7. Landwirtschaftliche Sämaschine nach irgend einem der Ansprüche 1 bis 6, ***dadurch gekennzeichnet,* dass** die Öffnungswerkzeuge (7) und die Saatablageelemente (8) voneinander unabhängig sind.

8. Landwirtschaftliche Sämaschine nach irgend einem der Ansprüche 1 bis 7, ***dadurch gekennzeichnet,* dass** Verriegelungsmittel (28) zwischen dem Gestell (3) und dem Tragrahmen (18) angebracht sind, die während der Arbeit das freie Schwenken des Tragrahmens (18) in Bezug zum Gestell (3) gestatten und das Schwenken während des Transports aufheben.

9. Landwirtschaftliche Sämaschine nach Anspruch 8, ***dadurch gekennzeichnet,* dass** das Drehgelenk (24) automatisch beim Transport über die Verriegelungsmittel (28) festgestellt wird.

10. Landwirtschaftliche Sämaschine nach Anspruch 8 oder 9, ***dadurch gekennzeichnet,* dass** die Verriegelungsmittel (28) aus einer Gleitschiene (29) und mindestens einem Betätigungselement (30) bestehen.
